# EUROPÄISCHE PATENTSCHRIFT

(11) **EP 2 226 176 B1**
(45) Veröffentlichungstag und Bekanntmachung des Hinweises auf die Patenterteilung: **03.07.2013**
(21) Anmeldenummer: 10155171.1
(22) Anmeldetag: 02.03.2010
(51) Int. Cl.: B29C 45/17

(54) **Verfahren und Vorrichtung zur Herstellung eines Kunststoffteils**
Method and device for producing a plastic part
Procédé et dispositif de fabrication d'une pièce en plastique

(30) Priorität: 02.03.2009 DE 102009001276
(43) Veröffentlichungstag der Anmeldung: 08.09.2010
(73) Patentinhaber: Geiger Automotive GmbH, 82418 Murnau (DE)
(72) Erfinder: Schmitt, Alexander, 82467 Garmisch-Partenkirchen (DE); Jourez, Michael, 6600 Reutte (AT); Pfannkuchen, Ernst, 82491 Grainau (DE)
(74) Vertreter: Lermer, Christoph

(56) Entgegenhaltungen:
- EP-A1- 2 145 747
- JP-A- 10 180 812
- "Möglichkeiten und Grenzen der Projektilinjektionstechnik" IKV FACHTAGUNG GAS- UND WASSERINJEKTIONSTECHNIK POTENZIALE NUTZEN, HERAUSFORDERUNGEN MEISTERN,, 28. November 2007 (2007-11-28), Seiten 1-7, XP007905530

## Beschreibung

### TECHNISCHES GEBIET

Die Erfindung betrifft ein Verfahren zur Herstellung eines Kunststoffteils mit einem Hohlraum, insbesondere ein Verfahren zur Herstellung eines rohrförmigen Kunststoffteils. Ferner betrifft die Erfindung eine Vorrichtung zur Herstellung eines Kunststoffteils mit einem Hohlraum, insbesondere eine Vorrichtung zur Durchführung des Verfahrens, umfassend: eine Kavität zum Einbringen einer Menge geschmolzenen Kunststoffs; und einen Injektor mit einer Injektoröffnung zum Einbringen eines Fluids in die wenigstens teilweise mit geschmolzenem Kunststoff gefüllte Kavität zur Verdrängung von Kunststoff aus der Kavität.

### STAND DER TECHNIK

Für die Herstellung von Kunststoffrohren, Leitungen und dergleichen, stehen unterschiedliche Verfahren zur Verfügung.

In der Regel wird zunächst eine Kavität eines Formwerkzeugs, die eine der Außenkontur des herzustellenden Rohrs komplementäre Innenkontur aufweist, mit geschmolzenem Kunststoffmaterial befüllt. Durch die Wärmeabfuhr an den Wänden der Kavität verfestigt sich, unter Umständen unterstützt durch eine Kühlung, die Kunststoffschmelze im Bereich der Wände der Kavität. Sobald sich durch die Verfestigung des Kunststoffs eine ausreichende Wandstärke ausgebildet hat, wird in einem Fluid-Injektionsverfahren (Gasinjektionsverfahren, Flüssigkeitsinjektionsverfahren) ein Fluid zur Ausbildung des Rohrinneren eingebracht, indem das innerhalb der erstarrten Rohrwände vorhandene, noch flüssige Kunststoffmaterial aus der Kavität durch das Fluid verdrängt wird. Die aus dem Bauteil ausgetriebene Kunststoffschmelze kann sowohl in eine Nebenkavität als auch zurück in die Spritzgussmaschine gedrückt werden.

Bei diesen Verfahren ergeben sich jedoch prozessbedingt - in Abhängigkeit vom Rohrquerschnitt, vom Fertigungsverfahren, den Prozessparametern und dem Werkstoff - relativ hohe Bauteilwandstärken. Beispielsweise sind die Wandstärken bereits bei Rohrdurchmessern von 35 mm Außendurchmesser so groß, dass es zu einem durch die Gravitation verursachten unerwünschten Ablaufen der Kunststoffschmelze im Rohr kommen kann. Schon bei Außendurchmessern der Rohre von beispielsweise 40 mm bis 45 mm wird die Verfahrensgrenze erreicht.

In erster Linie führen die großen Wandstärken jedoch zu einem hohen Materialbedarf, zu langen Abkühlzeiten zur Bildung der Rohrwände und zu entsprechenden langen Zykluszeiten bei der Produktion. Eine Herstellung von Rohren mit Hilfe von Fluid-Injektionsverfahren ist für größere Rohrdurchmesser jedenfalls unwirtschaftlich.

Zur Herstellung von Rohren mit größerem Durchmesser wurden daher Projektilverfahren vorgeschlagen. Dabei wird vor jeder Fluid-Injektion ein Projektil an geeigneter Stelle in die Kavität gebracht und zur Erzeugung des Rohrhohlraums mittels eines Fluids durch das Rohr getrieben. Nachteilig bei diesem Verfahren ist insbesondere die Tatsache, dass bei jedem hergestellten Bauteil in einem gesonderten Verfahrensschritt ein Projektil auf den Fluid-Injektor gesetzt werden muss. Außerdem ist das Verfahren ausschließlich zur Herstellung gleichmäßiger, runder Rohrquerschnitte verwendbar. Für jeden Rohrquerschnitt muss ein teilespezifisches Projektil hergestellt werden.

Im Ergebnis sind auch beim Projektilverfahren durch den zusätzlich notwendigen Schritt des Einbringens des Projektils der Aufwand und die Zykluszeiten relativ hoch.

Der Artikel "Möglichkeiten und Grenzen der Projekttil-Injektionstechnik", 1KV Fachtagung Gas- und Wasserinjektionstechnik, 28.11.2007, offenbart eine Sonderverfahrensvariante der Porjektil-Injektionstechnik, wobei das Projektil direkt im Prozess angespritzt wird. Die eingefrorene Randschicht der Injektorkappe wird als Projektil genutzt. Die Injektorkappe ist am Fuß mit einer Teflonkappe versehen, sodass dort eine thermisch induzierte SollBruchstelle entsteht.

Die Druckschrift EP 2145747 A1 zeigt eine Gießvorrichtung und ein Gießverfahren zur Herstellung hohler Gegenstände mit einem beim Gießvorgang gebildeten Projektil.

### AUFGABE DER ERFINDUNG

Ausgehend davon ist es die Aufgabe der vorliegenden Erfindung, ein Verfahren und eine Vorrichtung zur Durchführung des Verfahrens bereitzustellen, mit denen Kunststoffteile mit einem Hohlraum, insbesondere Rohre, Leitungen und dergleichen, mit verkürzter Zykluszeit herstellbar sind.

### TECHNISCHE LÖSUNG

Diese Aufgabe wird gelöst durch ein Verfahren nach Anspruch 1 und eine Vorrichtung nach Anspruch 7.

Vorteilhafte Weiterbildungen der Erfindung sind Gegenstand der jeweiligen abhängigen Ansprüche.

Das Verfahren zur Herstellung eines Kunststoffteils mit einem Hohlraum, insbesondere zur Herstellung eines rohrförmigen Kunststoffteils, umfasst die Schritte: a) Bereitstellen einer Menge geschmolzenen Kunststoffs innerhalb einer Kavität; b) Bildung mindestens eines Bereichs verfestigten Kunststoffs innerhalb der Kavität; und c) Einbringen eines Fluids über eine Injektoröffnung in die Kavität zur Verdrängung von Kunststoffmaterial aus der Kavität; wobei das im Schritt c) über die Injektoröffnung eingebrachtes Fluid den verfestigten Kunsstoff vom Injektor abreißt und anschließend zur Ausbildung des Hohlraums im Kunststoffteil innerhalb der Kavität durch die Kunststoffschmelze hindurch bewegt. Das Abreißen entsteht an im Verfestigungsbereich gebildeten Soll-Bruchstellen, die durch die Geometrie des Injektors bestimmt sind.

Durch die Verwendung eines Verfestigungsbereichs, der sich im Kunststoff selbst ausbildet, als Projektil zur Bildung des Hohlraums im Kunststoffteil wird der Schmelze-Austreibe-Vorgang gegenüber reinen Fluid-Injektionsverfahren deutlich verbessert. Mittels des Verfahrens sind sehr glatte, gleichmäßige und dünne Wandstärken der herzustellenden rohrförmigen Bauteile realisierbar.

Mit einer Verringerung der Bauteilwandstärken gehen Materialeinsparung und eine Reduzierung der Fertigungszeit (Abkühlungszeit) einher. Gravitationseffekte in Form ablaufenden Kunststoffs, wie sie bei Fluid-Injektionsverfahren auftreten, werden verhindert. Außerdem können die Verfahrensgrenzen zu deutlich größeren Rohrdurchmessern hin ausgeweitet werden.

Auch gegenüber Projektilverfahren wird die Zykluszeit bei der Herstellung des Kunststoffbauteils erheblich reduziert, da wenigstens auf den zusätzlichen Schritt des Einbringens eines Projektils in die Kavität verzichtet werden kann. Das Projektil besteht grundsätzlich aus dem in die Kavität eingebrachten Kunststoffmaterial, also aus dem gleichen Material wie das Rohr. Somit kann das gesamte ausgetriebene Material inklusive Projektil bei nachfolgenden Herstellungsprozessen wieder verwendet werden.

Darüber hinaus ist, im Gegensatz zu herkömmlichen Projektilverfahren, bei dem erfindungsgemäßen Verfahren das Projektil während des Austreibungsvorgangs noch relativ heiß und damit im gewissen Maß flexibel. Auf diese Weise lassen sich Rohrquerschnittsänderungen abbilden. In den Bereichen zwischen verschiedenen Rohrdurchmessern lassen sich kontinuierliche Übergänge ausbilden. Insgesamt wird das Ergebnis der Austreibung des flüssigen Kunststoffmaterials aufgrund der weichen Kappenstruktur verbessert, da sich das relativ flexible Projektil an die Rohrgeometrie anpasst.

Die Verwendung der um die Injektoroberfläche entstehenden Kunststoffkappe als Austreibkolben bzw. Projektil für den Fluid-Injektionsprozess wird insbesondere durch eine geeignete Injektorgeometrie bzw. eine geeignete Gestaltung des Injektors ermöglicht. Zum einen wird dadurch die Projektilform vorgegeben. Entscheidend ist jedoch auch, dass das über die Injektoröffnung zugeführte Fluid nicht unkontrolliert entweichen kann, sondern die Kappe erst nach dem Aufbau eines bestimmten Drucks an vorgegebenen Soll-Bruchstellen absprengt. Anschließend wird das Projektil durch die Schmelze getrieben.

Als Fluid kann insbesondere Gas, jedoch auch eine Flüssigkeit eingesetzt werden. Das Fluid wird zum wenigstens teilweisen Abheben der Kappe und zum Absprengen der Kappe vom Injekto, unter den Verfestigungsbereich bzw. unter die Kappe gebracht. Anschließend wird das Projektil bzw. die Kappe durch das eingebrachte Fluid auf einem kontrollierten, vorgegebenen Pfad durch die Kavität bewegt. Die Geometrie des Injektors ist also insbesondere auch für die Gasverteilung bzw. den Gasfluss unter dem Projektil vor dem Absprengen desselben von der Injektoroberfläche bedeutend. Ein unkontrolliertes Abreißen des Verfestigungsbereichs bzw. ein Abreißen von zufällig gebildeten, verfestigten Bereichen soll dagegen möglichst verhindert werden.

Besonders geeignet ist das erfindungsgemäße Verfahren zur Herstellung rohrförmiger Bauteile mit eher geringen Krümmungen und entsprechend geringen Umlenkungen des Projektils sowie stetigen, nicht zu abrupten Querschnittsänderungen.

Insbesondere wird der im Schritt b) gebildete Bereich verfestigten Kunststoffs als Verfestigungsbereich angrenzend an und/oder nahe der Injektoröffnung ausgebildet. Dies bedeutet, dass der Verfestigungsbereich als Schicht auf der Injektoroberfläche anliegt und die Öffnung im gewissen Grad abdeckt. Durch diese Anordnung wird beim Einbringen des Fluids unter die Verfestigungsschicht der Druck erhöht, bis die Schicht an vorgegebenen Soll-Bruchstellen abreißt. Anschließend wird die verfestigte Schicht als Projektil durch den von den verfestigten Rohrwänden begrenzten Rohrinnenbereich getrieben.

Vorzugsweise wird der Verfestigungsbereich durch das Einbringen des Fluids im Schritt c) als Projektil zur Ausbildung des Hohlraums des Kunststoffteils verwendet. Die Form des Projektils kann weitgehend durch die Geometrie des Injektors bestimmt werden. Weitere für die Projektilform bedeutende Parameter sind die Anordnung der Soll-Bruchstellen, durch die das eingebrachte Fluid nach dem Aufbau eines bestimmten Drucks unter der Kappe als erstes ausströmt (unter Umständen unterstützt durch eine geeignete Abkühlung des Injektors), und/oder Prozessparameter wie z. B. die Verfestigungszeit.

Insbesondere wird der im Schritt b) gebildete Bereich verfestigten Kunststoffs als ein die Injektoröffnung abschließender kappenartiger Bereich ausgebildet. Der Verfestigungsbereich kann damit als eine Art Kappe über dem Injektor, beispielsweise an der Injektoroberfläche anliegend, ausgebildet werden. Die Injektorgeometrie bestimmt die Form der Kappe. Zur geeigneten Anordnung der Soll-Bruchstellen können apparative oder verfahrenstechnische Maßnahmen ergriffen werden. Die Kappe soll bei einem bestimmten Fluid-Druck an vorgegebenen Stellen, insbesondere an ihren Enden, abreißen.

Insbesondere sprengt bzw. reißt das über die Injektoröffnung im Schritt c) zugeführte Fluid den Verfestigungsbereich zunächst vom Injektor ab, bevor der Verfestigungsbereich durch die Kunststoffschmelze bewegt wird. Der als Projektil wirkende Verfestigungsbereich verdrängt den flüssigen bzw. noch ausreichend weichen Kunststoff innerhalb der verfestigten Wände, die sich in der Nähe der Wände der Kavität ausgebildet haben, und erzeugt so einen definierten Kanal bzw. Hohlraum im Kunststoffspritzgussteil. Die Wände des herzustellenden Rohrs können durch den Einsatz des Projektils relativ dünn und mit hoher Oberflächenqualität ausgebildet werden. Zudem können aufgrund der Flexibilität des noch weichen Projektils Rohre mit unterschiedlichem Querschnitt hergestellt werden.

Als zusätzliche Maßnahme kann der Injektor zur Ausbildung des definierten Verfestigungsbereichs während der Verfestigung im Schritt b) gekühlt werden.

Vorzugsweise erfolgt die Einleitung des Fluids im Schritt c) nach einer Zeitspanne, in der sich eine projektilartige Verfestigungsschicht über dem Injektor ausgebildet hat. Die Zeitspanne ist abhängig vom apparativen Aufbau und den übrigen Verfahrensvariablen, wie z. B. Injektorgeometrie, Maßnahmen zum Erzeugen der Soll-Bruchstellen, Kühlungsparameter, Art des Kunststoffmaterials, usw.

Die Erfindung wird auch gelöst durch die Bereitstellung einer Vorrichtung zur Herstellung eines Kunststoffteils mit einem Hohlraum, insbesondere zur Herstellung eines rohrförmigen Kunststoffteils, umfassend eine Kavität zum Einbringen einer Menge geschmolzenen Kunststoffs, und einen Injektor mit einer Injektoröffnung zum Einbringen eines Fluids in die wenigstens teilweise mit Kunststoff gefüllte Kavität zur Verdrängung von Kunststoffmaterial aus der Kavität. Erfindungsgemäß sind Mittel zur lokalen Verfestigung einer in die Kavität eingebrachten Kunststoffschmelze vorgesehen, wobei die Vorrichtung derart angepasst ist, dass der wenigstens eine Verfestigungsbereich beim Einbringen eines Fluids über die Injektoröffnung zur Ausbildung eines Hohlraums innerhalb des Kunststoffs auf einem vorbestimmten Pfad durch die Kavität bewegbar ist. Die Mittel umfassen eine Injektorgeometrie geometrie derart, dass in Verfestigungs bereich Soll-Bruchstellen entstehen.

Insbesondere sind die Mittel zur lokalen Verfestigung der in die Kavität eingebrachten Kunststoffschmelze derart ausgebildet, dass wenigstens ein Verfestigungsbereich innerhalb der flüssigen Schmelze angrenzend an und/oder nahe der Injektoröffnung entsteht.

Vorzugsweise weist der Injektor eine Geometrie derart auf, dass der Verfestigungsbereich eine angrenzend an und/oder nahe der Injektoröffnung ausgebildete Kunststoffkappe bildet.

In einer besonderen Ausführungsform weist der Injektor eine Geometrie derart auf, dass der Verfestigungsbereich Soll-Bruchstellen aufweist, die beim Einbringen des Fluids über die Injektoröffnung beim Überschreiten eines von dem Fluid ausgeübten Drucks aufbrechen. Auf diese Weise wird die Kappe von der Injektoroberfläche gezielt abgerissen und durch das Kunststoffmaterial getrieben. So wird ein definiertes Abreißen des an die Injektoröffnung angrenzenden Verfestigungsbereichs vom Injektor beim Einbringen eines Fluids durch die Injektoröffnung gewährleistet. Es können jedoch auch zusätzliche apparative und konstruktive Maßnahmen ergriffen werden, um den Fluss des Fluids unter die Kappe zu steuern, so dass die Kappe definiert abreißt und mit Hilfe des nachfließenden Fluids weiter bewegt wird.

Vorzugsweise weist der Injektor eine zum auszubildenden Verfestigungsbereich komplementäre Geometrie auf. Der Injektor kann beispielsweise als ein in die Kavität ragender Vorsprung mit einer abgerundeten, konvexen Oberfläche ausgebildet sein, über der sich ein kappenartiger Verfestigungsbereich ausbilden kann. Der Injektor kann wenigstens eine Öffnung für das Fluid aufweisen, beispielsweise im Zentralbereich an einer Oberseite des konvexen Vorsprungs. Alternativ oder zusätzlich dazu kann der Injektor jedoch auch eine oder mehrere weitere Öffnungen aufweisen, die in geeigneter Weise unterhalb des sich während der Durchführung des Verfahrens ausbildenden Verfestigungsbereichs am Injektor angeordnet sind. Auf diese Weise kann eine gezielte und gleichmäßige Zuführung des Fluids unter die Kappe gewährleistet werden, so dass diese beim Überschreiten eines vorgegebenen Fluid-Drucks an einer definierten Soll-Bruchstelle abreißt und auf einem durch die verfestigten Wandbereiche des herzustellenden Rohrs definierten Pfad durch die Kunststoffschmelze bewegt wird.

Insbesondere kann die Vorrichtung Mittel zur Kühlung des Injektors zur Ausbildung des Verfestigungsbereichs umfassen. Eine Kühlung ist eine zusätzlich denkbare Maßnahme, um die Projektilbildung zu beeinflussen. Eine konstante Temperatur des Injektors sorgt darüber hinaus für stabile Bedingungen bei der sequentiellen Herstellung eine Charge von Kunststoffteilen.

Vorzugsweise ist die Kavität zur Bildung eines rohrförmigen Bauteils im Wesentlichen zylindrisch ausgebildet. Sie kann dabei über ihre axiale Länge einen konstanten Querschnitt aufweisen. In einer bevorzugten Ausführungsform kann jedoch die Kavität einen über ihre axiale Länge variierenden Durchmesser aufweisen.

### KURZE BESCHREIBUNG DER FIGUREN

Weitere Merkmale und Vorteile der Erfindung ergeben sich aus der Beschreibung eines bevorzugten Ausführungsbeispiels anhand der Figuren. Es zeigen:
- Figur 1: eine Vorrichtung zur Herstellung eines Kunststoffrohrs mit Hilfe des erfindungsgemäßen Verfahrens in einem ersten Verfahrenszustand; und
- Figur 2: die Vorrichtung aus Figur 1 in einem zweiten Verfahrenszustand.

### DETAILLIERTE BESCHREIBUNG EINES AUSFÜHRUNGSBEISPIELS

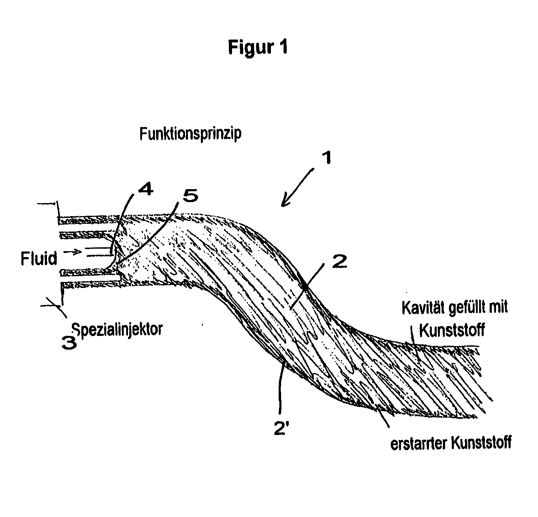

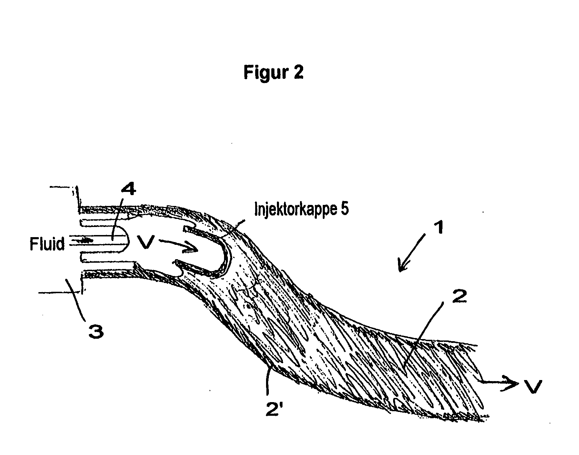

Die Figuren 1 und 2 zeigen eine Vorrichtung 1 zur Herstellung eines Kunststoffrohrs in einem Spritzgussverfahren.

Beim Herstellungsprozess wird zunächst eine Kavität 2 im Wesentlichen vollständig mit Kunststoff befüllt. Anschließend kühlt der Kunststoff, unter Umständen unterstützt durch eine entsprechende Kühlung, insbesondere in den Randbereichen 2' der Kavität ab, so dass in diesen Bereichen eine erstarrte Kunststoffschicht entsteht, die später im Wesentlichen die Wände des herzustellenden Kunststoffrohrs bildet.

Erfindungsgemäß ist darüber hinaus ein speziell ausgebildeter Injektor 3 mit einer Öffnung 4 für das Einbringen eines Fluids vorgesehen. Die Injektorgeometrie ist derart gewählt, dass sich auch an der Injektoroberfläche eine erstarrte Kunststoffschicht 5 ausbildet, die sich über die Öffnung 4 erstreckt.

Sobald die Kunststoffschicht 5 eine gewünschte Stärke erreicht hat, wird über die Öffnung 4 ein Fluid zugeführt, welches bewirkt, dass die Kappe sich, wie in der Figur 2 skizziert, definiert vom Injektor 3 löst und durch die Kavität 2 getrieben wird. Dabei wird der noch flüssige Kunststoff im zentralen Bereich des Rohrs durch die Injektorkappe 5 verdrängt. Er kann in die durch den Pfeil V angedeutete Richtung beispielsweise in eine Nebenkavität oder zurück in den Injektor gedrückt werden.

Die verfestigte Injektorkappe 5, die als Projektil wirkt, weist jedoch eine Flexibilität auf, die ausreicht, um das Projektil auch durch eine Rohrverengung (nicht dargestellt) hindurch zu treiben. Auf diese Weise können mit Hilfe des Verfahrens auch Rohre mit sich änderndem Querschnitt mit kontinuierlichen Übergängen zwischen den einzelnen Rohrabschnitten hergestellt werden.

Insgesamt vereint das erfindungsgemäße Verfahren Vorteile reiner Fluid-Injektionsverfahren (beispielsweise Herstellung von Rohren mit sich ändernden Querschnitten) mit denen von Projektilverfahren (Bereitstellung dünner Wandstärken auch bei großen Rohrdurchmessern).

## Patentansprüche

1. Verfahren zur Herstellung eines Kunststoffteils mit einem Hohlraum, insbesondere zur Herstellung eines rohrförmigen Kunststoffteils, umfassend die Schritte:
a) Bereitstellen einer Menge geschmolzenen Kunststoffs innerhalb einer Kavität (2);
b) Bildung mindestens eines Bereichs verfestigten Kunststoffs (5) innerhalb der Kavität; und
c) Einbringen eines Fluids über eine Injektoröffnung (4) in die Kavität (2) zur Verdrängung von Kunststoffmaterial aus der Kavität (2), wobei das zugeführte Fluid den Bereich verfestigten Kunststoffs (5) vom Injektor abreißt, und anschließend das
über die Injektoröffnung (4) eingebrachte Fluid einen Bereich verfestigten Kunststoffs (5) zur Ausbildung des Hohlraums im herzustellenden Kunststoffteil innerhalb der Kavität (2) durch den noch geschmolzenen Kunststoff hindurch bewegt; wobei das Abreißen im Schritt c) an im Verfestigungsbereich (5) gebildeten Soll-Bruchstellen stattfindet, an denen der verfestigte Kunststoff (5) beim Einbringen des Fluids über die Injektoröffnung (4) beim Überschreiten eines vom Fluid ausgeübten Drucks abreißt,
**dadurch gekennzeichnet, dass**
die Sollbruchstellen durch die Geometrie des Injektors bestimmt sind.

2. Verfahren nach Anspruch 1,
**dadurch gekennzeichnet, dass**
der im Schritt b) gebildete Bereich verfestigten Kunststoffs (5) als Verfestigungsbereich angrenzend an und/oder nahe der Injektoröffnung (4) ausgebildet wird.

3. Verfahren nach einem der vorhergehenden Ansprüche,
**dadurch gekennzeichnet, dass**
der Bereich verfestigten Kunststoffs (5) durch das Einbringen des Fluids im Schritt c) als Projektil zur Ausbildung des Hohlraums des herzustellenden Kunststoffteils verwendet wird.

4. Verfahren nach einem der vorhergehenden Ansprüche,
**dadurch gekennzeichnet, dass**
der im Schritt b) gebildete Bereich verfestigten Kunststoffs (5) als ein die Injektoröffnung (4) abschließender, kappenartiger Bereich ausgebildet wird.

5. Verfahren nach einem der vorhergehenden Ansprüche,
**dadurch gekennzeichnet, dass**
der Injektor (3) zur Ausbildung eines definierten Verfestigungsbereichs (5) innerhalb der Kunststoffschmelze während der Verfestigung im Schritt b) gekühlt wird.

6. Verfahren nach einem der vorhergehenden Ansprüche,
**dadurch gekennzeichnet, dass**
das Einbringen des Fluids im Schritt c) nach einer Zeitspanne durchgeführt wird, in der sich über dem Injektor (3) eine projektilartige Verfestigungsschicht (5) ausgebildet hat.

7. Vorrichtung (1) zur Herstellung eines Kunststoffteils mit einem Hohlraum, insbesondere zur Herstellung eines rohrförmigen Kunststoffteils, umfassend:
eine Kavität (2) zum Einbringen einer Menge geschmolzenen Kunststoffs; und
einen Injektor (3) mit einer Injektoröffnung (4) zum Einbringen eines Fluids in die wenigstens teilweise mit Kunststoff gefüllte Kavität (2) zur Verdrängung von Kunststoffmaterial aus der Kavität (2);
wobei die Vorrichtung (1) Mittel zur lokalen Verfestigung einer in die Kavität (2) eingebrachten Kunststoffschmelze und zur Ausbildung eines lokalen Verfestigungsbereichs (5) im Kunststoff aufweist, und
die Vorrichtung (1) derart angepasst ist, dass der wenigstens eine Verfestigungsbereich (5) beim Einbringen eines Fluids über die Injektoröffnung (4) zur Ausbildung eines Hohlraums innerhalb des Kunststoffs auf einem vorbestimmten Pfad durch die Kavität (2) bewegbar ist; wobei die Kappe beim Einbringen des Fluids über die Injektoröffnung (4) beim Überschreiten eines vom Fluid ausgeübten Drucks an Soll-Bruchstellen definiert abreißt,
**dadurch gekennzeichnet, dass**
die Mittel eine Injektorgeometrie derart umfassen, dass die Soll-Bruchstellen im Verfestigungsbereich (5) entstehen.

8. Vorrichtung nach Anspruch 7,
**dadurch gekennzeichnet, dass**
die Mittel zur lokalen Verfestigung der in die Kavität eingebrachten Kunststoffschmelze derart ausgebildet sind, dass wenigstens ein Verfestigungsbereich (5) innerhalb der flüssigen Schmelze angrenzend an und/oder nahe der Injektoröffnung (4) ausgebildet wird.

9. Vorrichtung nach einem der Ansprüche 7 oder 8,
**dadurch gekennzeichnet, dass**
der Injektor (3) eine Geometrie derart aufweist, dass der Verfestigungsbereich eine angrenzend an und/oder nahe der Injektoröffnung (4) ausgebildete Kunststoffkappe bildet.

10. Verfahren nach einem der vorhergehenden Ansprüche 8 oder 9, **dadurch gekennzeichnet, dass**
der Injektor (3) eine zum auszubildenden Verfestigungsbereich (5) komplementäre Geometrie aufweist.

11. Vorrichtung nach einem der Ansprüche 8 bis 10,
**dadurch gekennzeichnet, dass**
die Vorrichtung (1) Mittel zur Kühlung des Injektors (3) zur Ausbildung des Verfestigungsbereichs (5) umfassen.

12. Vorrichtung (1) nach einem der vorhergehenden Ansprüche 8 bis 11,
**dadurch gekennzeichnet, dass**
die Kavität (2) zur Bildung eines rohrförmigen Bauteils im Wesentlichen zylindrisch ausgebildet ist.

13. Vorrichtung (1) nach einem der Ansprüche 8 bis 12,
**dadurch gekennzeichnet, dass**
die Kavität (2) einen über ihre axiale Länge variierenden Durchmesser aufweist.

## Claims

1. Method for producing a plastic part containing a hollow cavity, especially for producing a pipe-shaped plastic part, comprising the steps:
a) provision of a quantity of molten plastic inside a mould cavity (2);
b) formation of at least one region of solidified plastic (5) inside the mould cavity;
and
c) introduction of a fluid into the mould cavity (2) via an injector opening (4) for the purpose of displacing plastic material from the mould cavity (2), wherein the introduced fluid tears off the region of solidified plastic (5) from the injector and subsequently the fluid introduced via the injector opening (4) moves a region of solidified plastic (5) through the still molten plastic for the purpose of forming the hollow cavity in the plastic part to be produced inside the mould cavity (2); wherein the tearing off in step c) occurs at the pre-determined rupture points formed in the region of solidification (5), at which rupture points the solidified plastic (5), upon introduction of the fluid via the injector opening (4), is torn off when a pressure exerted by the fluid is exceeded,
**characterised by** the fact that
the pre-determined rupture points are determined by the geometry of the injector.

2. Method in accordance with claim 1,
**characterised by** the fact that
the region of solidified plastic (5) formed in step b) is formed contiguous with and/or close to the injector opening (4).

3. Method in accordance with any of the previous claims,
**characterised by** the fact that
the region of solidified plastic (5) is used, upon introduction of the fluid in step c), as a projectile for forming the hollow cavity of the plastic part to be produced.

4. Method in accordance with any of the previous claims,
**characterised by** the fact that
the region of solidified plastic (5) formed in step b) is formed as a cap-like region sealing the injector opening (4).

5. Method in accordance with any of the previous claims,
**characterised by** the fact that
the injector (3) for the purpose of forming a defined region of solidification (5) inside the plastic melt during the solidification in step b) is cooled.

6. Method in accordance with any of the previous claims,
**characterised by** the fact that
the introduction of the fluid in step c) is performed after a period of time in which a projectile-like solidified layer (5) has formed over the injector (3).

7. Device (1) for the production of a plastic part with a hollow cavity, especially for the production of a pipe-like plastic part, comprising: a mould cavity (2) for the introduction of a quantity of molten plastic; and an injector (3) with an injector opening (4) for the purpose of introducing a fluid into the mould cavity (2), which is at least partially filled with plastic, for the purpose of displacing plastic material from the mould cavity (2);
wherein the device (1) has means for the purpose of locally solidifying a plastic melt introduced into the mould cavity (2) and for the formation of a local region of solidification (5) in the plastic, and the device (1) is adapted such that the at least one region of solidification (5) can, upon introduction of a fluid via the injector opening (4) for the purpose of forming a hollow cavity inside the plastic, be moved on a pre-set path through the mould cavity (2); wherein the cap, upon introduction of the fluid via the injector opening (4), tears off in a defined manner at pre-determined rupture points when a pressure exerted by the fluid is exceeded,
**characterised by** the fact that
the means comprise an injector geometry such that the pre-determined rupture points arise in the region of solidification (5).

8. Device in accordance with claim 7,
**characterised by** the fact that
the means for the purpose of local solidification of the plastic melt introduced into the mould cavity are formed in such a manner that at least one region of solidification (5) is formed inside the liquid melt contiguous with and/or close to the injector opening (4).

9. Device in accordance with any of claims 7 or 8,
**characterised by** the fact that
the injector (3) has a geometry such that the region of solidification forms a plastic cap contiguous with and/or close to the injector opening (4).

10. Method in accordance with any of the previous claims 8 or 9,
**characterised by** the fact that
the injector (3) has a geometry that is complementary to the region of solidification (5) to be formed.

11. Device in accordance with any of claims 8 to 10, **characterised by** the fact that the device (1) comprises means for cooling the injector (3) for the purpose of forming the region of solidification (5).

12. Device (1) in accordance with any of the previous claims 8 to 11,
**characterised by** the fact that
the mould cavity (2) is essentially formed cylindrically for the purpose of forming a pipe-shaped part.

13. Device (1) in accordance with any of the previous claims 8 to 12,
**characterised by** the fact that
the mould cavity (2) has a diameter which varies along its axial length.

## Revendications

1. Procédé de fabrication d'une pièce en matière plastique avec un espace creux, en particulier d'une pièce en matière plastique tubulaire, comprenant les étapes :
a) Mise à disposition d'une quantité de matière plastique fondue à l'intérieur d'une cavité (2) ;
b) Formation d'au moins une zone de matière plastique solidifiée (5) à l'intérieur de la cavité et
c) Mise en place d'un fluide par une ouverture d'injecteur (4) dans la cavité (2) pour refouler la matière plastique de la cavité (2), le fluide amené déchirant la zone de matière plastique solidifiée (5) de l'injecteur et ensuite le fluide mis en place par l'ouverture d'injecteur (4) déplaçant une zone de matière plastique solidifiée (5) pour former l'espace creux dans la pièce en matière plastique à fabriquer en traversant la matière plastique encore fondue, le déchirement à l'étape c) ayant lieu à des endroits de rupture nominaux dans la zone de solidification (5), endroits auxquels la matière plastique solidifiée (5) déchirant lors de la mise en place du fluide par l'ouverture d'injecteur (4) lors du dépassement d'une pression exercée par le fluide
**caractérisé en ce que**
les endroits de rupture nominaux sont définis par la géométrie de l'injecteur.

2. Procédé selon la revendication 1,
**caractérisé en ce que**
la matière plastique solidifiée (5) dans la zone formée à l'étape b) est formée comme une zone de solidification adjacente à et/ou près de l'ouverture d'injecteur (4).

3. Procédé selon l'une des revendications précédentes,
**caractérisé en ce que**
la zone de matière plastique solidifiée (5) est utilisée, grâce à la mise en place du fluide à l'étape c), comme projectile pour configurer l'espace creux de la pièce en matière plastique à fabriquer.

4. Procédé selon l'une des revendications précédentes,
**caractérisé en ce que**
la zone de matière plastique solidifiée (5) formée à l'étape b) est formée comme une zone de type capuchon qui ferme l'ouverture d'injecteur (4).

5. Procédé selon l'une des revendications précédentes,
**caractérisé en ce que**
l'injecteur (3) est refroidi pendant la solidification à l'étape (b) pour former une zone de solidification définie (5) à l'intérieur de la masse plastique fondue

6. Procédé selon l'une des revendications précédentes,
**caractérisé en ce que**
la mise en place du fluide à l'étape c) est exécutée pendant une période de temps pendant laquelle une couche de solidification de type projectile (5) est configurée par l'injecteur (3).

7. Dispositif (1) pour fabriquer une pièce en matière plastique avec une cavité, en particulier pour fabriquer une pièce en plastique tubulaire, comprenant :
une cavité (2) pour mettre en place une quantité de matière plastique fondue et
un injecteur (3) avec une ouverture d'injecteur (4) pour mettre en place un fluide dans la cavité (2) au moins partiellement remplie de matière plastique (2) pour refouler de la matière plastique de la cavité (2)
le dispositif (1) présentant des moyens pour la solidification locale d'une masse fondue de matière plastique mise en place dans la cavité (2) et pour former une zone de solidification locale (5) dans la matière plastique et le dispositif (1) étant adapté de telle manière que la zone de solidification (5) qui existe au moins pouvant se déplacer lors de la mise en place d'un fluide par l'ouverture d'injecteur (4) pour former un espace creux à l'intérieur de la matière plastique sur un trajet prédéfini à travers la cavité (2), le capuchon se déchirant de manière définie à des endroits de rupture nominaux,
**caractérisé en ce que**
les moyens comprennent une géométrie d'injecteur telle que les endroits de rupture nominaux se créent dans la zone de solidification (5).

8. Dispositif selon la revendication 7,
**caractérisé en ce que**
les moyens pour la solidification locale de la masse fondue de matière plastique mise en place dans la cavité (2) sont configurés de telle manière qu'au moins une zone de solidification (5) est formée à l'intérieur de la masse fondue liquide en étant adjacente et/ou près de l'ouverture d'injecteur (4).

9. Dispositif selon l'une des revendications 7 ou 8,
**caractérisé en ce que**
l'injecteur (3) présente une géométrie telle que la zone de solidification forme un capuchon de matière plastique formé en étant adjacent et/ou près de l'ouverture d'injecteur (4).

10. Procédé selon l'une des revendications précédentes 8 ou 9,
**caractérisé en ce que**
l'injecteur (3) présente une géométrie complémentaire à la zone de solidification qui doit être formée (5).

11. Dispositif selon l'une des revendications 8 à 10,
**caractérisé en ce que**
le dispositif (1) comprend des moyens pour refroidir l'injecteur (3) pour former la zone de solidification (5).

12. Dispositif (1) selon l'une des revendications précédentes 8 à 11,
**caractérisé en ce que**
la cavité (2) est formée substantiellement cylindrique pour former un composant tubulaire.

13. Dispositif (1) selon l'une des revendications 8 à 12,
**caractérisé en ce que**
la cavité (2) présente un diamètre qui varie sur sa longueur axiale.
